# EUROPEAN PATENT APPLICATION

(11) **EP 2 813 944 A1**
(43) Date of publication of application: **17.12.2014**
(21) Application number: 13171663.1
(22) Date of filing: 12.06.2013
(51) Int. Cl.: G06F 9/44

(54) **Versioning of electronic data in software management system**

(71) Applicant: Siemens Aktiengesellschaft, 80333 München (DE)
(72) Inventor: Govindaru, Anil, 560047 Bangalore (IN); Uppunda, Prashanth, 560078 Bangalore (IN)

(57) **Abstract**

The present invention relates to versioning of electronic data in software management systems (100). The software management system (100) includes a development environment (102) and an object repository (104). The development environment (102) provides access to one or more logical objects arranged in a hierarchical model, each logical objects being characterized by a corresponding object type. The object repository (104) is configured for storing one or more archive files corresponding to at least one of the logical objects. According to the techniques of the present invention, initially, a policy master tool (112, 200, 506) is configured. The policy master tool (112, 200, 506) includes a plurality of versioning policies. Subsequently, a policy mapping tool (114, 400, 508) is configured, wherein each object type is associated to a unique versioning policy. Finally, transformation between the logical objects in the development environment (102) and the corresponding archive files in the object repository (104) is managed based on the versioning policy associated therewith.

## Description

The present invention relates to versioning of electronic data and more particularly, to a method, a system and a computer program product for versioning of electronic data in software management systems.

Automation systems, such as those used for manufacturing various articles of manufacture and/or controlling and monitoring processes, are inherently based on various engineering applications that are developed in software management systems (also known as engineering systems).

Such engineering applications typically works based on a 'project' concept. A project includes various engineering or logical objects, such as but not limited to, logical objects logically representing programmable logic controllers, human machine interface devices, function block resident on individual programmable logic controllers, tag tables and screen control objects resident on individual human machine interfaces, and so forth.

In such engineering applications, various changes may be required owing to changes in the design of the assemblies, the components used therein, and so on. It is an important challenge to be able to assign appropriate versions to individual logical objects within each engineering applications, i.e. the projects to track various versions thereof, and to validate or release only those versions of individual logical objects that have been duly tested and approved for release.

Versioning is a commonly used technique to address the above-stated need. In accordance with this technique, individual components or logical objects in an engineering application project are converted into individual physical files, and then "versioned" or archived in a repository. These physical files can then be used to retrieve back the corresponding logical objects in the software management system. In a software management system that supports multi-user environment, the repository acts to facilitate sharing and cooperation between multiple users.

Typically, while versioning an engineering object, several possibilities exist with regard to format of the physical file to be created in the repository. While extensible mark-up language (XML) representation of the logical objects is generally used, compressed serialized binary representation is also popular.

The main factors in deciding between the aforementioned formats are ease of integration and usability of logical objects in different development environments, and required storage memory. XML based representations are highly conducive for integration with different sets of tools and engineering environments. On the other hand, compressed serialized binary formats ensure minimum required storage memory.

In accordance with current practices, an archiving format is stipulated for individual engineering applications. The archiving format remains fixed or static over the course of project lifetime. The time and effort required in switching between different formats is generally prohibitive.

However, customer's requirements regarding archiving format of the logical objects to be stored in the repository may change over a period of time due to various reasons. Further, given the trade-off between existing archiving formats, software research and development communities are ever working on new formats for better representations and easier integration in different development environments. With development of a more efficient archiving format, the customer's desire to switch from an existing archiving format to a newer archiving format may become more compelling. As explained earlier, the current state of the art versioning techniques are not conducive to such changes.

Accordingly, there is a need for an improved versioning technique which facilitates switching between different archiving formats with relative ease.

It is therefore an object of the present invention to provide a method, a system and a computer program product for versioning of electronic data in software management systems that provides an improved version management of logical objects in the software management systems.

The object of the present invention is achieved by a method, a system, and a computer program product for versioning according to claims 1, 6, and 11 respectively. Further embodiments of the present invention are addressed in the dependent claims.

The underlying concept of the present invention is to configure a set of versioning policies in a software management system; each versioning policy is associated with an inter-conversion module based on a predefined archiving/de-archiving technique. Each object type is associated with a unique versioning policy. Thus, each logical object is associated with an archiving/de-archiving technique through a versioning policy. As will be appreciated, instead of binding each object to an archiving technique as is the practice in the current state of the art, the techniques of the present invention provide a decoupled architecture for versioning logical objects in the software management system. The new versioning architecture of the present invention is amenable to changes in archiving format as and when required. Moreover, as per the requirements, different object types can be archived according to different techniques.

In a first aspect of the present invention, a method for versioning of electronic data suitable for use in a software management system is provided. The software management system includes a development environment and an object repository. The development environment provides access to one or more logical objects arranged in a hierarchical model, wherein each of the logical objects is characterized by a corresponding object type. The object repository is configured for storing one or more archive files corresponding to at least one of the logical objects. According to the method of the present invention, initially, a policy master tool is configured. The policy master tool includes a plurality of versioning policies, wherein each versioning policy is associated with an inter-conversion module selected from a set of predefined inter-conversion modules. Subsequently, a policy mapping tool is configured, wherein each object type is associated to a unique versioning policy selected from the plurality of versioning policies. Finally, transformation between the logical objects in the development environment and the corresponding archive files in the object repository is managed based on the versioning policy associated therewith.

In a second aspect of the present invention, a software management system configured for versioning of electronic data is provided. The software management system includes a development environment and an object repository. The development environment provides access to one or more logical objects arranged in a hierarchical model, wherein each of the logical objects is characterized by a corresponding object type. The object repository is configured for storing one or more archive files corresponding to at least one of the logical objects. The software management system includes a policy master module, a policy mapping module, and a managing module. The policy master module provides for configuring a policy master tool, the policy master tool includes a plurality of versioning policies, wherein each versioning policy is associated with an inter-conversion module selected from a set of predefined inter-conversion modules. The policy mapping module provides for configuring a policy mapping tool, wherein each object type is associated to a unique versioning policy selected from the plurality of versioning policies. The managing module is configured for managing transformation between the logical objects in the development environment and the corresponding archive files in the object repository based on the versioning policy associated therewith.

In a third aspect of the present invention, a computer program product for versioning of electronic data suitable for use in a software management system is provided in accordance with the first and the second aspect of the present invention.

Accordingly, the present invention provides a system, a method, and a computer program product for versioning of electronic data in a software management system. According to the essential technique of the present invention, an engineering or logical object type is dynamically associated with a specific versioning policy during versioning of the corresponding engineering/logical object.

According to one of the advantages of the techniques of the present invention depending on the customer/user scenarios, the object type-policy association can be decided or altered during runtime by the user. Thus, the present invention advantageously provides flexibility to users to choose appropriate archiving format for storage of logical objects in the object repository based on his/her needs. Such flexibility is very beneficial, in particular, in case of release of new archiving formats over period of time. The logical objects can be versioned in accordance with one of the currently available techniques and subsequently, switch to the new format at a later point in time.

Another advantage of the present invention providing support for a new archiving/versioning technique is greatly facilitated. A new inter-conversion module may be downloaded from a third-party or a proprietary inter-conversion module may be developed and "plugged-in" to the software management system; and new versioning policy based thereon may be defined and applied to desired object types.

Still another advantage of the present invention is that some customer may prefer to version different object types in different formats. For example, some customer may not want to version some selected logical objects in an XML format to avoid undesired or unauthorized access to the same; in such cases, compressed serialized binary format is a preferred choice. However, at the same time, some other logical objects need to be XML format to ensure ready availability to multiple users. In such scenario, the present invention advantageously provides the flexibility to define different versioning policies for different object types.

The present invention is further described hereinafter with reference to illustrated embodiments shown in the accompanying drawings, in which:
- FIG 1: illustrates a schematic view of a software management system in accordance with an embodiment of the present invention,
- FIG 2: illustrates an exemplary policy master tool in accordance with an embodiment of the present invention,
- FIG 3: illustrates an exemplary user interface rendered using policy mapping module in accordance with an embodiment of the present invention,
- FIG 4: illustrates an exemplary policy mapping tool in accordance with an embodiment of the present invention,
- FIG 5: illustrates a schematic view of versioning architecture of a software management system in accordance with an embodiment of the present invention, and
- FIG 6: illustrates a flow chart for a method for versioning of electronic data suitable for use in a software management system in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

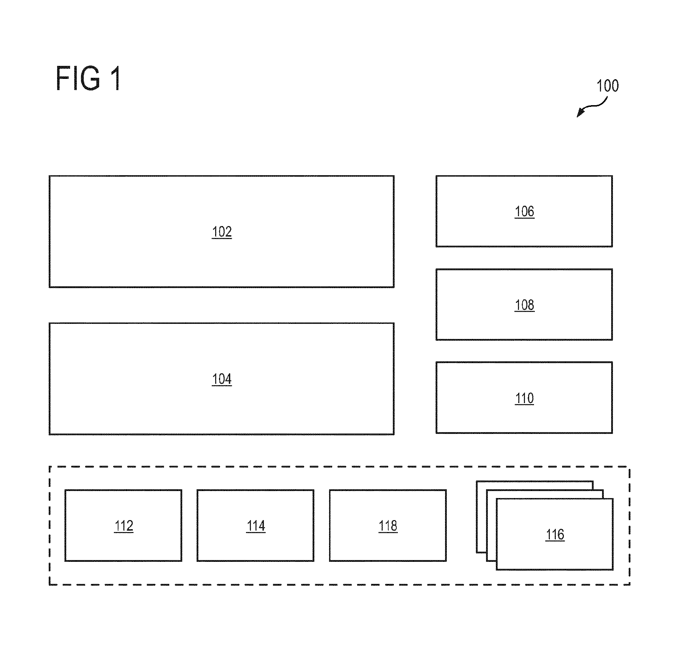

Referring to FIG 1, a schematic view of a software management system 100 is illustrated in accordance with an embodiment of the present invention.

The software management system 100 includes a development environment 102 and an object repository 104. In addition, the software management system 100 includes a policy master module 106, a policy mapping module 108, and a managing module 110. The policy master module 106 and the policy mapping module 108 are communicatively coupled to a policy master tool 112 and a policy mapping tool 114 respectively. The software management system 100 further includes an inter-conversion module 116 and an archive mapping tool 118.

The software management system 100 is configured for versioning of electronic data resident therein. As stated earlier, architecturally, the software management system 100 includes two main components, namely, the development environment 102 and the object repository 104.

The development environment 102 provides access to one or more logical objects arranged in a hierarchical model. The hierarchical model is formed based on logical and functional relationships between individual logical objects. Examples of such logical objects include but are not limited to, logical objects representing programmable logic controllers, human machine interface devices, function block resident on individual programmable logic controllers, tag tables and screen control objects resident on individual human machine interfaces, and so forth. Each logical object is characterized by a corresponding object type, i.e. to say, that the object types could be tag tables, screen control objects and so on.

The object repository 104 is configured for storing one or more archive files corresponding to the logical objects.

As explained in the preceding description, the present invention is intended to provide a versioning technique to manage transformation between the logical objects accessible through the development environment 102 and the archive files stored in the object repository 104. Through the techniques of the present invention, each object type is mapped to an archiving technique with a versioning policy providing an intermediate link between the two, as will now be explained in detail.

The software management system 100 is provided with the policy master module 106. The policy master module 106 provides an interface for configuring the policy master tool 112. The policy master tool 112 includes a plurality of versioning policies. Each versioning policy is associated with an individual inter-conversion module selected from the set of predefined inter-conversion modules 116. Each inter-conversion module 116 implements a predefined archiving/de-archiving technique.

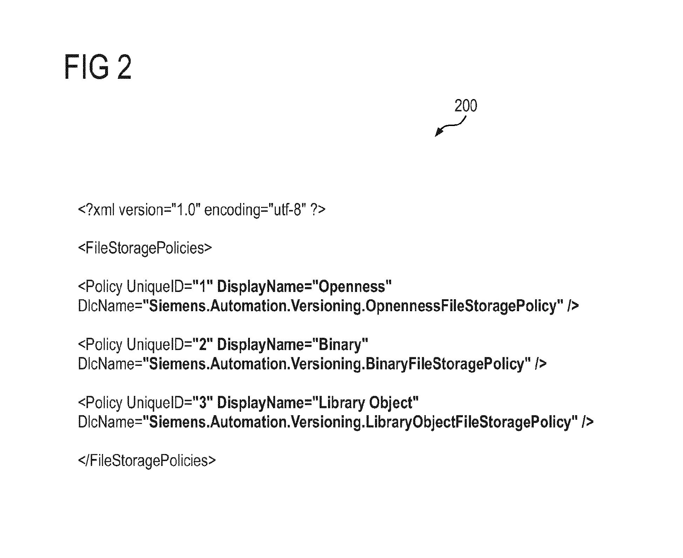

In an exemplary embodiment of the present invention, the policy master tool 112 is embodied in an XML file such as one shown in FIG 2. As can be seen in FIG 2, an exemplary policy master tool is illustrated in accordance with an embodiment of the present invention. The policy master tool 112 in this case is embodied in the XML code 200. In the example shown in the adjoining figure, three distinct versioning policies with unique identities 1, 2, and 3 and display names as "Openness", "Binary", and "Library Object" respectively are configured. The software management system 100, and in particular, the policy master module 106 may be configured to provide a suitable user interface wherein a user of the software management system 100 may configure the policy master tool 112 as required. As can be further seen in the adjoining, each versioning policy is further associated with one of the inter-conversion module 116. For example, versioning policy *"Openness"* is associated with inter-conversion module 116 identified as *"Siemens.Automation.Versioning.OpnennessFileStoragePolicy".*

Referring back to FIG 1, the policy mapping module 108 provides for configuring the policy mapping tool 114. The policy mapping tool 114 associates each object type with a unique versioning policy selected from the plurality of versioning policies available in the policy master tool 112.

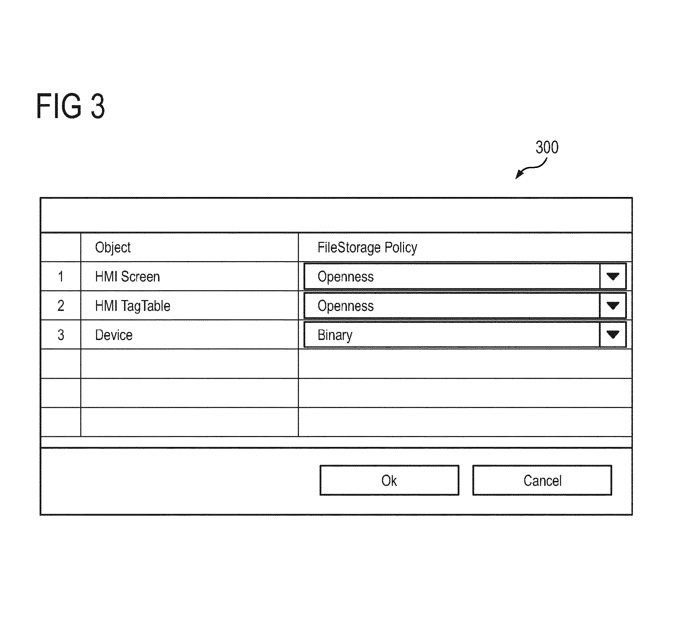

Referring now to FIG 3, an exemplary user interface 300 rendered using policy mapping module 108 is illustrated in accordance with an embodiment of the present invention.

As can be seen, the exemplary user interface 300 provides a list of various distinct object types corresponding to the logical objects resident in the software management system 100. In one exemplary embodiment of the present invention, such list of object types is automatically identified by the policy mapping module 108 and displayed on the exemplary user interface 300. The exemplary user interface 300 provides an option to configure a versioning policy for each object type. In the example shown in FIG 3, the user is provided with a drop down list of available versioning policies and the user may select a desired versioning policy from the drop down list. As a result of user inputs, the policy mapping tool 114 is configured.

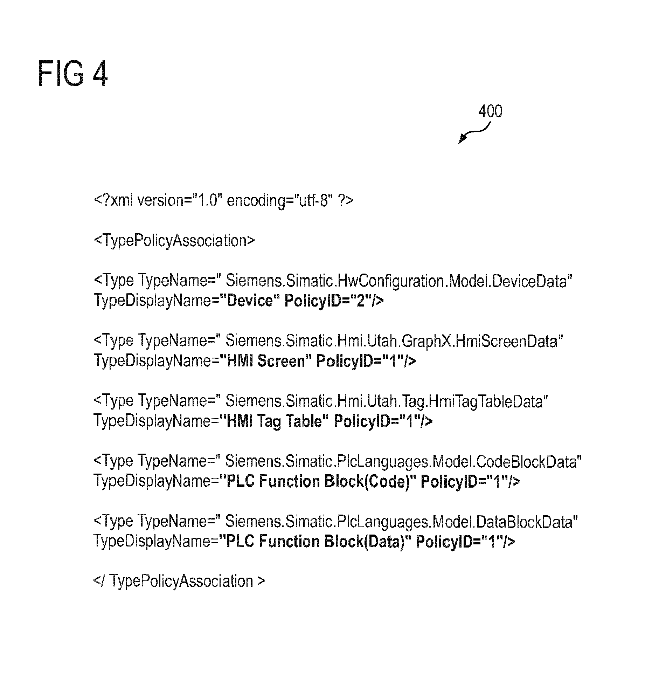

Referring now to FIG 4, an exemplary policy mapping tool 114 is shown in accordance with an embodiment of the present invention.

In an exemplary embodiment of the present invention, the policy mapping tool 114 is embodied in an XML file such as one shown in FIG 4. The policy mapping tool 114 in this case is embodied in the XML code 400. In the example shown in the adjoining figure, five distinct object types are mapped to unique versioning policies. For example, the object type "HMI Screen" is associated with the versioning policy with PolicyID=1 *("Openness"* in the current example).

It should be noted that the policy master tool 112 and the policy mapping tool 114 may be implemented in any desired manner and the exemplary XML codes for the individual tools 112, 114 should not be construed as limiting in any manner whatsoever. For example, the tools 112, 114 may be implemented as a look-up table in a database, and so on.

Referring back to FIG 1, the managing module 110 is configured for managing transformation between the logical objects in the development environment 102 and the corresponding archive files in the object repository 104 based on the versioning policy associated therewith.

Thus, when an action to transfer a logical object from the development environment 102 to the object repository 104 is initiated, the managing module 110 dynamically identifies the corresponding versioning policy based on the object type associated therewith. Based on the versioning policy, the managing module 110 activates the corresponding inter-conversion module 116. The archiving/versioning of the logical object is proceeded with using the relevant inter-conversion module 116. When an action to transfer an archive file from the object repository 104 to the development environment 102 is initiated, a similar sequence of steps is performed to complete the desired action.

As will now be understood, each inter-conversion module 116 is configured for archiving one or more logical objects in an object repository based on a user input therefor. When an inter-conversion module 116 is invoked by the managing module 110 to archive/version a logical object in the development environment 102, the inter-conversion module 116 creates an archive file corresponding to the logical object in the object repository 104 using the corresponding archiving technique. The archive file, thus created, is associated with a unique version identifier. It should be noted that in case an archive file for the logical object already exists in the object repository 104, a new archive file is created with an updated version identifier. However, in case, no previous archive file exists, a new archive file is created with an initial version. The techniques related to assigning version identifiers to archive files are generally understood in the art and hence, not being explained in detail herein for sake of brevity.

When the inter-conversion module 116 creates an archive file, the managing module 110 configures an archive mapping tool 118 to maintain information related to association between the logical objects and corresponding one or more archive files.

The managing module 110 is further configured for retrieving one or more archive files from the object repository 104 based on a user input therefor. The archive files are retrieved in accordance with a corresponding versioning policy associated therewith. When an archive file is retrieved, a logical object corresponding to the archive file is created in the development environment 102 using a de-archiving technique in accordance with the inter-conversion module.

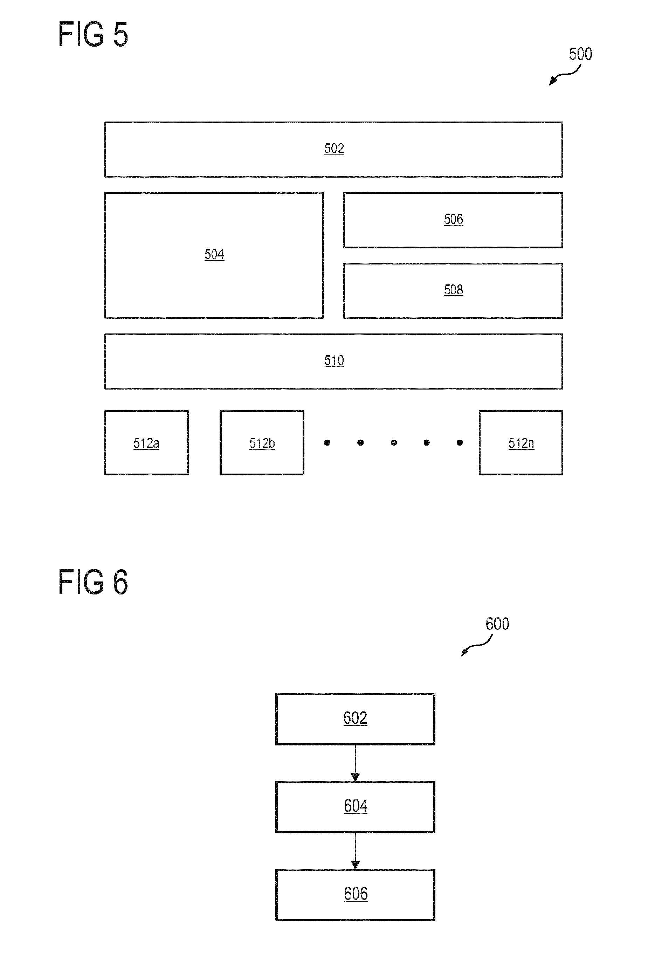

Referring now to FIG 5, a schematic view of versioning architecture 500 illustrated in accordance with an embodiment of the present invention.

In accordance with the versioning architecture 500 shown in the adjoining figure, a versioning user interface 502 is provided. In one example, the versioning user interface 502, in effect, includes an interface to the development environment 102 and the object repository 104. The user may initiate an action to transfer a logical object from the development environment 102 to create an archive file in the object repository 104 or vice versa. In one example, such the user may perform a drag-and-drop operation to indicate the desired action. The user request is intercepted by the business logic module 504. The business logic module 504 works in coordination with policy master tool 506 and policy mapping tool 508. These tools 506, 508 are same as tools 112, 114 as described in conjunction with the preceding figures.

The business logic module 504 eventually invokes a desired inter-conversion module 512 through a file storage application interface 510. It should be noted that the inter-conversion module 512 are same as the inter-conversion module 116 described in conjunction with the preceding figures.

Referring now to FIG 6, a flow chart for a method for versioning of electronic data suitable for use in a software management system is illustrated in accordance with an embodiment of the present invention.

The software management system includes a development environment and an object repository. The development environment provides access to one or more logical objects arranged in a hierarchical model, wherein each of the logical objects is characterized by a corresponding object type. The object repository is configured for storing one or more archive files corresponding to at least one of the logical objects.

At step 602, a policy master tool is configured. The policy master tool includes multiple versioning policies. Each versioning policy is associated with an inter-conversion module selected from a set of predefined inter-conversion modules provided in the software management system.

At step 604, a policy mapping tool is configured. Each object type is associated to a unique versioning policy selected from the plurality of versioning policies.

At step 606, transformation between the logical objects in the development environment and the corresponding archive files in the object repository is managed based on the versioning policy associated therewith.

The transformation includes dynamically identifying the corresponding versioning policy based on the object type associated with one of the logical objects and the archive files. In essence, an archive file is also associated with an object type based on the corresponding logical object. The inter-conversion module associated with the corresponding versioning policy is activated to execute the desired transformation.

When the user action requires that a logical object is transferred from the development environment to an archive file in the object repository, one or more logical objects are archived in an object repository in accordance with a corresponding versioning policy associated therewith. Thus, an archive file corresponding to the logical object is created in the object repository using an archiving technique in accordance with the inter-conversion module. The archive file is associated with a version identifier.

In accordance with various techniques of the present invention, when an archive file is created in the object repository, an archive mapping tool is updated to maintain information related to association between the logical objects and corresponding one or more archive files. The archive mapping tool is referred to while retrieving the logical object back from the archive file.

The transformation between the logical objects in the development environment and the corresponding archive files in the object repository also includes retrieving one or more archive files from the object repository based on a user input therefor in accordance with a corresponding versioning policy associated therewith. During this stage, a logical object corresponding to the archive file is created in the development environment using a de-archiving technique in accordance with the inter-conversion module.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### LIST OF REFERENCES

- 100: SOFTWARE MANAGEMENT SYSTEM
- 102: DEVELOPMENT ENVIRONMENT
- 104: OBJECT REPOSITORY
- 106: POLICY MASTER MODULE
- 108: POLICY MAPPING MODULE
- 110: MANAGING MODULE
- 112: POLICY MASTER TOOL
- 114: POLICY MAPPING TOOL
- 116: INTER-CONVERSION MODULE
- 118: ARCHIVE MAPPING TOOL
- 200: XML CODE
- 300: EXEMPLARY USER INTERFACE
- 400: XML CODE
- 500: VERSIONING ARCHITECTURE
- 502: VERSIONING USER INTERFACE
- 504: BUSINESS LOGIC
- 506: POLICY MASTER TOOL
- 508: POLICY MAPPING TOOL
- 510: FILE-STORAGE APPLICATION INTERFACE
- 512: INTER-CONVERSION MODULE

## Claims

1. A method for versioning of electronic data suitable for use in a software management system (100), said software management system (100) comprising a development environment (102) providing access to one or more logical objects arranged in a hierarchical model, wherein each of said logical objects is **characterized by** a corresponding object type, and an object repository (104) configured for storing one or more archive files corresponding to at least one of said logical objects, said method comprising:
- configuring a policy master tool (112, 200, 506), said policy master tool (112, 200, 506) comprising a plurality of versioning policies, wherein each versioning policy is associated with an inter-conversion module (116, 512) selected from a set of predefined inter-conversion modules (116, 512),
- configuring a policy mapping tool (114, 400, 508),
wherein each object type is associated to a unique versioning policy selected from said plurality of versioning policies, and
- managing transformation between said logical objects in said development environment (102) and said corresponding archive files in said object repository (104) based on said versioning policy associated therewith.

2. The method according to claim 1, wherein said transformation comprises dynamically identifying said corresponding versioning policy based on said object type associated with one of said logical objects and said archive files, and activating said inter-conversion module (116, 512) associated with said corresponding versioning policy.

3. The method according to any of the preceding claims further comprising archiving one or more logical objects in an object repository (104) based on a user input therefor in accordance with a corresponding versioning policy associated therewith, whereby an archive file corresponding to said logical object is created in said object repository (104) using an archiving technique in accordance with said inter-conversion module (116, 512), wherein said archive file is associated with a version identifier.

4. The method according to claim 3, wherein archiving each of said logical objects further comprises configuring an archive mapping tool (118) to maintain information related to association between said logical objects and corresponding one or more archive files.

5. The method according to any of the preceding claims further comprising retrieving one or more archive files from said object repository (104) based on a user input therefor in accordance with a corresponding versioning policy associated therewith, whereby a logical object corresponding to said archive file is created in said development environment (102) using a de-archiving technique in accordance with said inter-conversion module (116, 512).

6. A software management system (100) configured for versioning of electronic data, said software management system (100) comprising a development environment (102) providing access to one or more logical objects arranged in a hierarchical model, wherein each of said logical objects is **characterized by** a corresponding object type, and an object repository (104) configured for storing one or more archive files corresponding to at least one of said logical objects, said software management system (100) comprising:
- a policy master module (106) for configuring a policy master tool (112, 200, 506), said policy master tool (112, 200, 506) comprising a plurality of versioning policies, wherein each versioning policy is associated with an inter-conversion module (116, 512) selected from a set of predefined inter-conversion modules (116, 512),
- a policy mapping module (108) for configuring a policy mapping tool (114, 400, 508), wherein each object type is associated to a unique versioning policy selected from said plurality of versioning policies, and
- a managing module (110) configured for managing transformation between said logical objects in said development environment (102) and said corresponding archive files in said object repository (104) based on said versioning policy associated therewith.

7. The system according to claim 6, wherein said managing module (110) is configured for dynamically identifying said corresponding versioning policy based on said object type associated with one of said logical objects and said archive files, and activating said inter-conversion module (116, 512) associated with said corresponding versioning policy.

8. The system according to any of the preceding claims,
wherein said inter-conversion module (116, 512) is configured for archiving one or more logical objects in an object repository (104) based on a user input therefor, whereby an archive file corresponding to said logical object is created in said object repository (104) using an archiving technique in accordance with said inter-conversion module (116, 512), wherein said archive file is associated with a version identifier.

9. The system according to claim 8, wherein archiving each of said logical objects further comprises configuring an archive mapping tool (118) to maintain information related to association between said logical objects and corresponding one or more archive files.

10. The system according to any of the preceding claims, wherein said managing module (110) is further configured for retrieving one or more archive files from said object repository (104) based on a user input therefor in accordance with a corresponding versioning policy associated therewith, whereby a logical object corresponding to said archive file is created in said development environment (102) using a de-archiving technique in accordance with said inter-conversion module (116, 512).

11. A computer program product embodied on a computer readable medium, said computer-readable medium comprising computer-executable instructions for versioning of electronic data suitable for use in a software management system (100), said software management system (100) comprising a development environment (102) providing access to one or more logical objects arranged in a hierarchical model, wherein each of said logical objects is **characterized by** a corresponding object type, and an object repository (104) configured for storing one or more archive files corresponding to at least one of said logical objects, said computer-executable instructions comprising:
- program instructions for configuring a policy master tool (112, 200, 506), said policy master tool (112, 200, 506) comprising a plurality of versioning policies, wherein each versioning policy is associated with an inter-conversion module (116, 512) selected from a set of predefined inter-conversion modules (116, 512),
- program instructions for configuring a policy mapping tool (114, 400, 508), wherein each object type is associated to a unique versioning policy selected from said plurality of versioning policies, and
- program instructions for managing transformation between said logical objects in said development environment (102) and said corresponding archive files in said object repository (104) based on said versioning policy associated therewith.

12. The computer program product according to claim 11,
wherein said program instructions for managing transformation comprises program instructions for dynamically identifying said corresponding versioning policy based on said object type associated with one of said logical objects and said archive files, and program instructions for activating said inter-conversion module (116, 512) associated with said corresponding versioning policy.

13. The computer program product according to any of the preceding claims further comprising program instructions for archiving one or more logical objects in an object repository (104) based on a user input therefor in accordance with a corresponding versioning policy associated therewith, whereby an archive file corresponding to said logical object is created in said object repository (104) using an archiving technique in accordance with said inter-conversion module (116, 512), wherein said archive file is associated with a version identifier.

14. The computer program product according to claim 13,
wherein program instructions for archiving each of said logical objects further comprises program instructions for configuring an archive mapping tool (118) to maintain information related to association between said logical objects and corresponding one or more archive files.

15. The computer program product according to any of the preceding claims further comprising program instructions for retrieving one or more archive files from said object repository (104) based on a user input therefor in accordance with a corresponding versioning policy associated therewith, whereby a logical object corresponding to said archive file is created in said development environment (102) using a de-archiving technique in accordance with said inter-conversion module (116, 512).
